# EUROPEAN PATENT SPECIFICATION

(11) **EP 3 339 068 B1**
(45) Date of publication and mention of the grant of the patent: **22.09.2021**
(21) Application number: 17210533.0
(22) Date of filing: 22.12.2017
(51) Int. Cl.: B60H 1/00, B60H 1/32, F25D 17/00, F25D 17/04, F25D 17/06, F25D 11/00

(54) **SYSTEMS AND METHODS OF DYNAMIC AIRFLOW CONTROL WITHIN AN INTERNAL SPACE**
SYSTEME UND VERFAHREN FÜR DYNAMISCHE LUFTSTROMREGELUNG IN EINEM INNENRAUM
SYSTÈMES ET PROCÉDÉS DE CONTRÔLE DE FLUX D'AIR DYNAMIQUE À L'INTÉRIEUR D'UN ESPACE INTERNE

(30) Priority: 23.12.2016 US 201615389616
(43) Date of publication of application: 27.06.2018
(73) Proprietor: Thermo King Corporation, Minneapolis, MN 55420 (US)
(72) Inventor: SRNEC, Matthew, Minnetonka, MN Minnesota 55345 (US); KROES, Paul J., Eden Prairie, MN Minnesota 55347 (US)
(74) Representative: Haseltine Lake Kempner LLP

(56) References cited:
- WO-A2-2007/134412
- DE-A1-102008 060 611
- JP-A- H11 201 618
- US-A- 5 235 866

## Description

### Field

The disclosure herein relates to providing conditioned air within a transport unit. More particularly, the disclosure herein relates to systems and methods of dynamic airflow control within a transport unit.

### Background

A transport refrigeration system (TRS) or heating, ventilation and air conditioning (HVAC) system is generally used to control an environmental condition (e.g., temperature, humidity, air quality, and the like) within an internal space of a transport unit (e.g., a container (e.g., container on a flat car, an intermodal container, etc.), a truck, a box car, a passenger bus, or other similar transport unit). A transport unit with a TRS is generally referred to as a refrigerated transport unit. Refrigerated transport units are commonly used to transport perishable items such as pharmaceuticals, produce, frozen foods, meat products, and the like. Typically, a transport refrigeration unit (TRU) is attached to the refrigerated transport unit to control the environmental condition of the cargo space within the transport unit. The TRU can include, without limitation, a compressor, a condenser, an expansion valve, an evaporator, and fans or blowers to control the heat exchange between the air inside the cargo space and the ambient air outside of the refrigerated transport unit. Conventionally, the TRU is generally installed on one side of the transport unit where conditioned air is blown into an internal space of the transport unit.

WO 2007/134412 discloses a cooling and/or heating device for the loading space of lorries or the like which consists of a ventilating device with a blowing channel and a suction channel to make the air circulate in the loading space, with one heat exchanger incorporated therein. The loading space is divided in several compartments that can be cooled or heated with the same heat exchanger, whereby the blowing channel and the suction channel of the ventilating device in each compartment respectively are provided with an outlet and an inlet, whereby in each compartment at least the outlet or the inlet can be closed off by means of a controlled valve which is opened or closed by means of a control unit as a function of the measured temperature in the compartment concerned so as to adjust the temperature in the compartment to a desired temperature set in the control unit or to a temperature interval set in the control unit.

### Summary

This invention is directed to systems and methods of dynamic airflow control within a transport unit according to the independent claims 1,6 and 13.

Generally, the embodiments disclosed herein can divert airflow within the transport unit in a dynamic and controlled manner. In particular, the embodiments disclosed herein provide an airflow distributor that is low profile and that can be dynamically adjusted to divert airflow to particular areas within the transport unit as desired. This allows for more precise and faster airflow control in the transport unit.

According to the invention, a dynamic airflow distributor is provided with a plurality of gap closing mechanisms provided along a perimeter of a chute body of the dynamic airflow distributor. The gap closing mechanisms can be controlled to pull the chute body up to the ceiling to choke off air flow as required to divert airflow to other locations of the transport unit. Accordingly, the gap closing mechanisms can choke off airflow to particular locations along the length of the dynamic airflow.

When the dynamic airflow distributor is in a fixed position, uneven airflow distribution within the transport unit can occur, particularly when cargo stored in the transport unit block airflow throughout the transport unit. By actively changing the airflow distribution from the dynamic airflow distributor to push the airflow only to locations within the transport unit in which the airflow is required, the temperature along the length of the transport unit can be more evenly distributed. This can reduce a runtime of a TRU providing the airflow and thereby saving energy (e.g., fuel saving) in operating the TRU and reducing the cost of operating the TRU.

In one embodiment, a dynamic airflow distribution system within an interior space of a transport unit is provided. The dynamic airflow distribution system includes a dynamic airflow distributor, a plurality of spacing devices, and a plurality of distributor gap closing mechanisms. The dynamic airflow distributor forms an airflow passage with a ceiling of the transport unit. The dynamic airflow distributor extends along a longitudinal direction of the transport unit. The plurality of spacing devices form a plurality of gaps between the ceiling and the dynamic airflow distributor. Each of the distributor gap closing mechanisms is associated with a corresponding gap of the plurality of gaps. Also, each of the plurality of distributor gap closing mechanisms controllably opens and closes the corresponding gap of the plurality of gaps.

In another embodiment, a method for dynamic airflow control within a transport unit using a dynamic airflow distribution system is provided. The dynamic airflow distribution system includes a dynamic airflow distributor that forms an airflow passage with a ceiling of the transport unit and extends along a longitudinal direction of the transport unit, a plurality of spacing devices that form a plurality of gaps between the ceiling and the dynamic airflow distributor, and a plurality of distributor gap closing mechanisms. Each of the distributor gap closing mechanisms is associated with a corresponding gap of the plurality of gaps, and each of the plurality of distributor gap closing mechanisms controllably opens and closes the corresponding gap of the plurality of gaps. The method includes a controller receiving data from a sensor that monitors a parameter within the transport unit. The method also includes the controller determining a particular location of a plurality of locations within the transport unit to direct conditioned air based on the data received from the sensor. Also, the method includes the controller instructing the dynamic airflow distribution system to divert conditioned air to the particular location within the transport unit. Further, the method includes the dynamic airflow distribution system diverting the conditioned air to the particular location within the transport unit.

In yet another embodiment, a dynamic airflow distributor for a dynamic airflow distribution system within an interior space of a transport unit is provided. The dynamic airflow distributor includes a chute body, a plurality of spacing devices and a plurality of distributor gap closing mechanisms. The chute body forms an airflow passage when attached to a ceiling of the transport unit and extends along a longitudinal direction of the transport unit. The plurality of spacing devices are disposed on the chute body and form a plurality of gaps between the ceiling and the chute body. The plurality of distributor gap closing mechanisms are disposed along a perimeter of the chute body. Each of the distributor gap closing mechanisms controllably opens and closes a corresponding gap of the plurality of gaps.

Other features and aspects will become apparent by consideration of the following detailed description and accompanying drawings.

### Brief Description of the Drawings

Reference is now made to the drawings in which like reference numbers represent corresponding parts throughout.
Fig. 1 illustrates a side schematic view of a transport unit equipped with a TRU and a dynamic airflow distribution system, according to one embodiment;
Figs. 2A and 2B illustrate schematic side views of a portion of the dynamic airflow distributor for the dynamic airflow distribution system shown in Fig. 1;
Fig. 3 illustrates a top schematic view of an internal space of the transport unit with the dynamic airflow distributor system shown in Fig. 1;
Fig. 4 illustrates a flowchart of a method of dynamic airflow control within a transport unit, according to one embodiment; and
Figs. 5A and 5B illustrate top cross-sectional views of a temperature distribution of a transport unit with a dynamic airflow distribution system when the dynamic airflow distribution system is not in use (Fig. 5A) and when the dynamic airflow distribution system is in use (Fig. 5B), according to one embodiment.

### Detailed Description

The embodiments described herein are directed to providing conditioned air within a transport unit. More particularly, the embodiments described herein are directed to systems and methods of dynamic airflow control within a transport unit.

Generally, the embodiments disclosed herein can divert airflow within the transport unit in a dynamic and controlled manner. In particular, the embodiments disclosed herein provide a dynamic airflow distributor that can be dynamically adjusted to divert airflow to particular areas within the transport unit as desired. These embodiments can be combined with a TRS (for cargo applications) and a HVAC system (for passenger vehicles) as required for the particular application.

A transport unit, as described herein, refers to both cargo and passenger vehicles such as for example, a container (e.g., container on a flat car, an intermodal container, etc.), a truck, a box car, or other similar transport unit.

Generally, an airflow can be circulated through an internal space of the transport unit to regulate an environmental condition (e.g., the temperature, the humidity, the atmosphere, etc.) within the internal space. The embodiments provided herein can help dynamically control the airflow distribution of the airflow within the internal space. Accordingly, the embodiments described herein can provide dynamic and controlled airflow distribution to particular locations of the internal space as required.

For example, in some embodiments, dynamic and controlled airflow distribution can provide even temperature distribution within the internal space of the transport unit to, for example, avoid uneven temperature distribution spots (e.g., hot spots, cold spots, etc.) within the internal space, and save energy for operating the TRU. The embodiments provided herein can also help reduce hot spots on load surface(s) and help improve the temperature homogeneity on the load surface(s).

References are made to the accompanying drawings that form a part hereof, and in which is shown by way of illustration of the embodiments in which the embodiments may be practiced. The term "couple" is generally referred to as "connect to" and/or "physically attach to." It is to be understood that the terms used herein are for the purpose of describing the figures and embodiments and should not be regarding as limiting the scope of the present application.

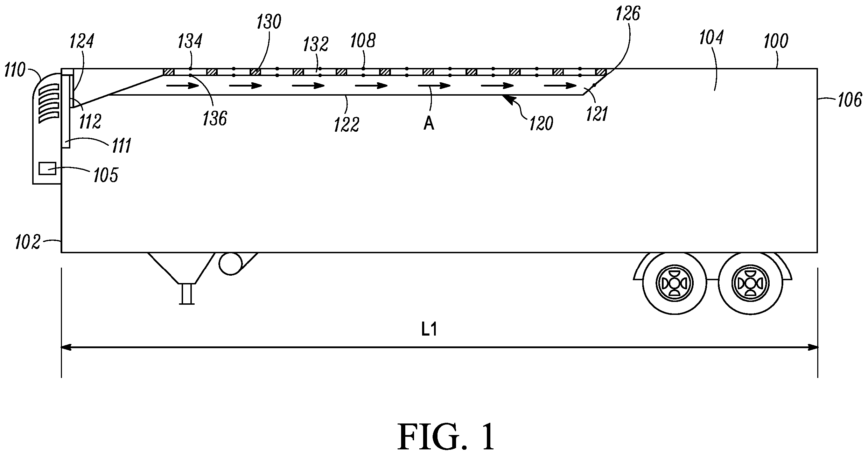

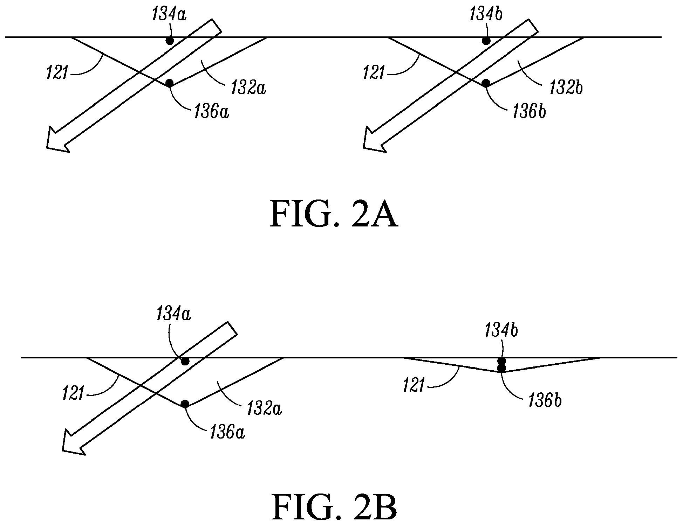

Fig. 1 illustrates one embodiment of a transport unit 100 equipped with a TRU 110 and a dynamic airflow distribution system 120. In the embodiment illustrated, the transport unit 100 is a truck trailer, with the appreciation that the transport unit can be other suitable apparatuses, such as a container (e.g., container on a flat car, an intermodal container, etc.), a truck, a box car, or other similar transport unit. Also, while the embodiment shown in Figs. 1 and 2 are directed to a transport unit for cargo applications where the dynamic airflow distribution system 120 is combined with a TRS, it will be appreciated that the dynamic airflow distribution system 120 can also be used in a transport unit for passenger applications (e.g., a passenger bus) and combined with a HVAC system. The dynamic airflow distribution system 120 can generally allow air to be dynamically discharged from a plurality of gaps 132 and a back end 126. The transport unit 100 can include one or more doors (not shown) for loading and unloading cargo into the transport unit 100.

The dynamic airflow distribution system 120 can help distribute airflow to pass over a load surface(s) and to the sides of the transport unit 100. The dynamic airflow distribution system 120 can generally allow air to be dynamically discharged from a plurality of gaps 132 along a side of the airflow distribution system 120 and a back end 126.

The TRU 110 is installed on a front wall 102 of the transport unit 100. The front wall 102 includes a return air bulkhead 111 having an air flow exit 112. The airflow exit 112 of the TRU 110 is configured to open to an internal space 104 of the transport unit 100. The TRU 110 includes a heat exchanger and a blower (not shown), which are configured to help exchange heat with airflow in the internal space 104 by directing the airflow through the heat exchanger. The airflow, after exchanging heat with the heat exchanger, can be directed out of the airflow exit 112 into the internal space 104. The TRU 110 is controlled by a TRS controller 105. In some embodiments, the heat exchanger of the TRU 110 can be a single host evaporator. In some other embodiments, the heat exchanger of the TRU 110 can include dual host evaporators that can be positioned side by side (e.g., a first host evaporator on a road side of the TRU 110 and a second host evaporator on a curb side of the TRU 110).

The dynamic airflow distribution system 120 is configured to provide dynamic airflow control within the transport unit 100. The dynamic airflow distribution system 120 includes a dynamic airflow distributor 122 that can be dynamically controlled to divert airflow to particular areas within the transport unit 100 as desired. In this embodiment, the dynamic airflow distribution system 120 is controlled by the TRS controller 105. However, it will be appreciated that in other embodiments, the dynamic airflow distribution system 120 can be controlled via its own controller (not shown) that can be located in the transport unit 100, the TRU 110, a driver controller located near the driver of the transport unit, etc.

The dynamic airflow distributor 122 includes a chute body 121 that extends in a longitudinal direction defined by a length L1 of the transport unit 100. The chute body 121 can be formed of, for example, a plastic or natural material. In some embodiments, the chute body 121 can be formed of vinyl. A front end 124 of the chute body 121 is configured to cover the airflow exit 112 of the TRU 110 so that the front end 124 can receive airflow from the airflow exit 112. In this embodiment, the chute body 121 is a single path central air chute that extends along a center path of the transport unit 100. In other embodiments, the chute body 121 can be a split finger air chute that splits near the airflow exit 112 two form two separate air chute fingers extending along opposite sides (e.g., a road side and a curb side) of the transport unit 100. It will also be appreciated that in other embodiments, the dynamic airflow distributor 122 can include a duct system instead of the chute body 121.

The back end 126 of the chute body 121 extends toward an end wall 106 of the transport unit 100 along the longitudinal direction defined by the length L1. In the illustrated embodiment, the back end 126 does not extend to the full length L1 of the transport unit 100. However, in other embodiments, the back end 126 can be configured to extend to the full length L1 of the transport unit 100. In some embodiments, the back end 126 is within about 5 feet from the end wall 106 of the transport unit 100. It is to be appreciated that the location of the back end 126 in the longitudinal direction can be varied and can be optimized, for example, by using a computer simulation analysis. That is, the back end 126 of the chute body 121 can vary based on, for example, user requirements, the length L1 of the transport unit 100, results of optimization analysis, etc.

The chute body 121 is spaced away from a ceiling 108 of the transport unit 100 using a plurality of spacers 130. The spacers 130 can help form the plurality of gaps 132 between the chute body 121 and the ceiling 108 in the longitudinal direction, which allows the airflow to discharge from the gaps 132 into the internal space 104. The chute body 121 can be installed to the ceiling 108 of the transport unit 100 by using, for example, a plurality of drive rivets (not shown) through the spacers 130 or by a rail attached to the ceiling 108.

The dynamic airflow distributor 122 and the ceiling 108 can form an airflow passage (illustrated in Fig. 1 by arrows) along the longitudinal direction defined by the length L1. In operation, the airflow passage A can be configured to direct and distribute airflow exiting the airflow exit 112 to flow from the front end 124 toward the back end 126 of the chute body 121. The back end 126 of the chute body 121 may generally be configured to allow the airflow to discharge from the back end 126. The plurality of gaps 132 can allow the airflow to discharge from the gaps 132 when the airflow flowing along the airflow passage A. Discharging the airflow from the gaps 132 and the back end 126 can help distribute the airflow evenly in the space 104 of the transport unit 100.

The dynamic airflow distribution system 120 also includes a plurality of ceiling gap closing mechanisms 134 paired with a plurality of distributor gap closing mechanisms 136 to open and close each of the plurality of gaps 132. That is, a ceiling gap closing mechanism 134 and a distributor gap closing mechanism 136 are provided at each of the gaps 132 and work in tandem to open or close their respective gap 132. Accordingly, the airflow distribution through each of the gaps 132 can be dynamically controlled.

In the embodiment shown in Fig. 1, the ceiling gap closing mechanisms 134 are provided on the ceiling 108 and the plurality of distributor gap closing mechanisms 136 are provided on the dynamic airflow distributor 122. In some embodiments, the ceiling gap closing mechanisms 134 can be attached directly to the ceiling 108. In other embodiments, the ceiling gap closing mechanisms 134 can be attached, for example, to a rail that is used to attach the dynamic airflow distributor 122 to the ceiling 108. Each of the plurality of distributor gap closing mechanisms 136 are provided along a perimeter of the

Each of the plurality of ceiling gap closing mechanisms 134 and/or each of the plurality of distributor gap closing mechanisms 136 can be independently controlled such that each of the gaps 132 can be opened and closed independently of the other gaps 132. Referring to Figs. 2A and 2B, a schematic side view of a portion of the dynamic airflow distributor 122 is shown. In Fig. 2A, the ceiling gap closing mechanism 134a and the distributor gap closing mechanism 136a are controlled to keep the gap 132a open. Similarly, the ceiling gap closing mechanism 134b and the distributor gap closing mechanism 136b are controlled to keep the gap 132b open. In contrast, as shown in Fig. 2B, the ceiling gap closing mechanism 134a and the distributor gap closing mechanism 136a are controlled to keep the gap 132a open but the ceiling gap closing mechanism 134b and the distributor gap closing mechanism 136b are controlled to keep the gap 132b closed.

In some embodiments, the plurality of ceiling gap closing mechanisms 134 and/or each of the plurality of distributor gap closing mechanisms 136 can be electrically controlled. For example, the ceiling gap closing mechanisms 134 and the distributor gap closing mechanisms 136 can be magnets or electromagnets that are configured to pair with each other. In one embodiment, the plurality of distributor gap closing mechanisms 136 can be electromagnets and the plurality of ceiling gap closing mechanisms 134 can be mating magnets that mate with the electromagnets. In this embodiment, each of the plurality of distributor gap closing mechanisms 136 can be controlled to open or close the respective gap 132. In another embodiment, the plurality of ceiling gap closing mechanisms 134 can be electromagnets and the plurality of distributor gap closing mechanisms 136 can be mating magnets that mate with the electro magnets. In this embodiment, each of the plurality of ceiling gap closing mechanisms 134 can be controlled to open or close the respective gap 132. In yet another embodiment, the plurality of ceiling gap closing mechanisms 134 can be electromagnets and the plurality of distributor gap closing mechanisms 136 can also be electromagnets that mate with the electromagnets of the plurality of ceiling gap closing mechanisms 134. In this embodiment, each of the plurality of ceiling gap closing mechanisms 134 and the plurality of distributor gap closing mechanisms 136 can be controlled to open or close the respective gap 132.

In some embodiments, the magnetic polarity of the electromagnets used as the plurality of ceiling gap closing mechanisms 134 and/or the plurality of distributor gap closing mechanisms 136 can be controlled to open and close the gaps 132. Also, in some embodiments, the field strength of the electromagnets used as the plurality of ceiling gap closing mechanisms 134 and/or the plurality of distributor gap closing mechanisms 136 can be varied to adjust the opening size of each of the plurality gaps 132 where air can pass through.

In some embodiments, the electromagnets of the plurality of ceiling gap closing mechanisms 134 and/or the plurality of distributor gap closing mechanisms 136 can be configured such that when any of the electromagnets are deactivated the corresponding gap 132 is opened and when any of the electromagnets are activated the corresponding gap 132 is closed. Also, in some embodiments, the electromagnets of the plurality of ceiling gap closing mechanisms 134 and/or the plurality of distributor gap closing mechanisms 136 can be configured to default to open any of the plurality of gaps 132 during a failure event (e.g., loss of power, loss of communication with the TRS controller 105

When the distributor gap closing mechanisms 136 are electromagnets, one or more wires can be fed through the dynamic airflow distributor 122 to each of the distributor gap closing mechanisms 136.

In other embodiments, the plurality of ceiling gap closing mechanisms 134 and/or each of the plurality of distributor gap closing mechanisms 136 can be mechanically controlled. For example, the ceiling gap closing mechanisms 134 and the distributor gap closing mechanisms 136 form a mechanical pulley system that allows each gap 132 to be opened or closed independently by controlling the respective first and distributor gap closing mechanism 134, 136 associated with the particular gap 132 to be controlled. For example, in some embodiments, the plurality of ceiling gap closing mechanisms 134 and/or the plurality of distributor gap closing mechanisms 136 can be pulleys in which a cable(s) (e.g., aircraft cables) passes through in order to open or close any one of the gaps 132.

It will be appreciated that when the dynamic airflow distributor 122 is a duct system, the duct system can includes a plurality of air vents and the plurality of distributor gap closing mechanisms 136 can controllably open and close each of the air vents independently to direct airflow as required.

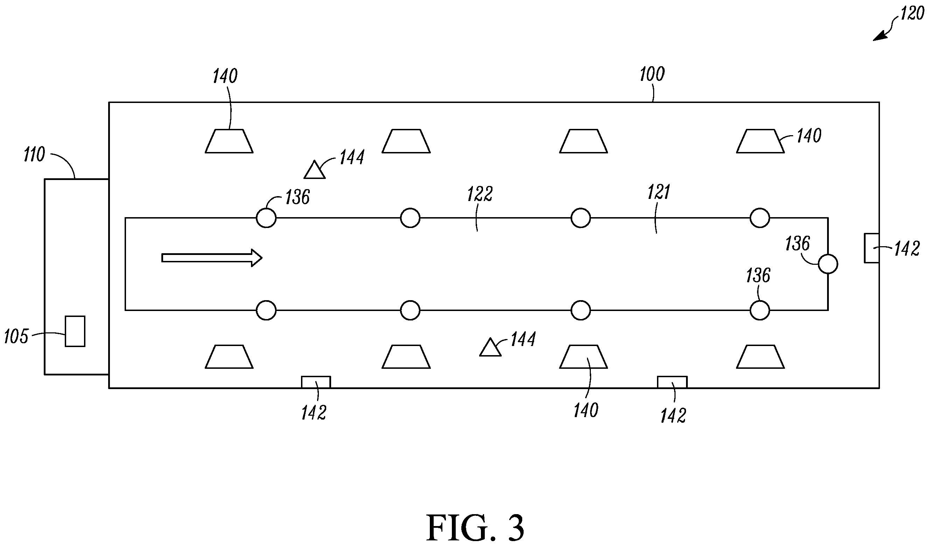

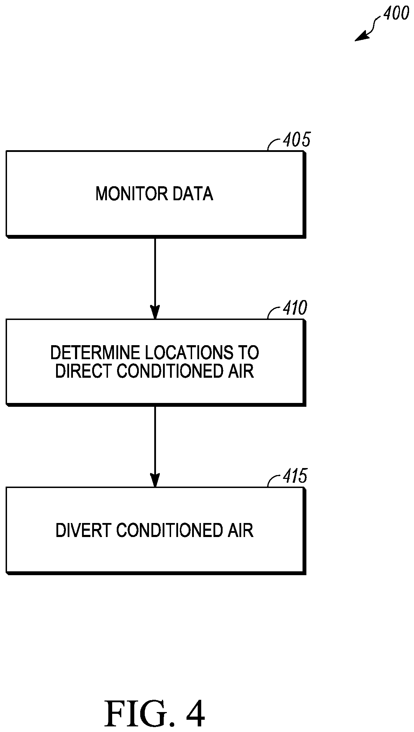

Referring to Fig. 3, the transport unit 100 includes a plurality of sensors 140, 142, 144 that monitor a parameter (e.g., temperature, door status, humidity, atmosphere, etc.). In particular, the transport unit 100 includes a plurality of temperature sensors 140 each of which monitors a real-time temperature at a particular location within the transport unit 100, a plurality of door sensors 142 each of which monitors in real-time when a door (not shown) of the transport unit 100 is opened or closed, and a plurality of temperature probes 144 each of which monitors a real-time temperature of a cargo (not shown) stored in the transport unit 100. It will be appreciated, that the dynamic airflow distribution system 120 can include other sensors (e.g., a humidity sensor, an atmosphere sensor, etc.) used for determining how the dynamic airflow distribution system 120 is to be controlled. Control and operation of the dynamic airflow distribution system 120 is discussed with respect to Figs. 4.

Also, as shown in Fig. 3, each of the plurality of distributor gap closing mechanisms 136 are provided along the perimeter of the chute body 121.

Fig. 4 illustrates a flowchart of a method 400 for controlling the dynamic airflow distribution system 120. At 405, the TRS controller 105 receives data sent from one or more of the plurality of sensors 140, 142, 144 monitoring a parameter within the transport unit.

At 410, the TRS controller 105 determines, based on the monitored data, locations within the transport unit 100 that required conditioned air from the TRU 110 and locations within the transport unit 100 that do not currently require conditioned air from the TRU 110.

At 415, the TRS controller 105 controls the dynamic airflow distribution system 120 to divert conditioned air from locations within the transport unit 100 that do not currently require conditioned air to locations within the transport unit 100 that do currently require conditioned air from the TRU 110. Optionally, the TRS controller 105 can also control operation of the TRU 110 based on the number of gaps 132 that are opened using the first and second closing mechanisms 134, 136. In some embodiments, the TRS controller 105 can control a fan speed of an evaporator blower(s) of the TRU 110 based on the number of gaps 132 that are opened using the first and second closing mechanisms 134, 136. For example, in one embodiment, the TRS controller 105 can reduce the fan speed of the evaporator blower(s) of the TRU 110 when less than a threshold amount (e.g., three or less) of gaps 132 are opened using the first and second closing mechanisms 134, 136. Accordingly, cargo located near the gaps 132 opened by the first and second closing mechanisms 134, 136 is protected from high pressure conditioned air directed from the TRU 110. The method 400 then returns to 405.

Illustrative examples of the method 400 are described in detail. It will be appreciated that the examples described below can be performed independently or in combination with each other. In one example, the TRS controller 105 can control the dynamic airflow distribution system 120 to provide a uniform temperature distribution within the internal space 104. At 410 the TRS controller 105 can determine a location of a hot spot or cold spot within the internal space 104. That is, the TRS controller 105 can use the monitored data received from the plurality of temperature sensors 140 to determine one or more hot spots and one or more cold spots within the internal space 104. A hot spot is defined herein as an area within the internal space 104 that has a higher temperature than the desired setpoint temperature for the internal space 104 and is a predetermined temperature amount greater than an average internal space temperature within the entire internal space 104 (e.g., ~10 °F greater than the average internal space temperature). A cold spot is defined herein as an area within the internal space 104 that has a lower temperature than the desired setpoint temperature for the internal space 104 and is a second predetermined temperature amount less than an average internal space temperature within the entire internal space 104 (e.g., ~10 °F less than the average internal space temperature).

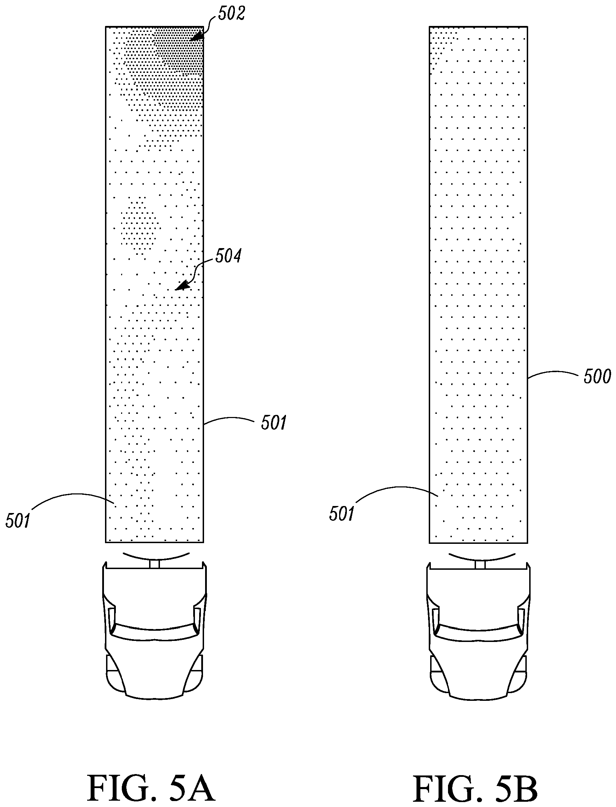

For example, as shown in Fig. 5A, the transport unit 500 includes an internal space 501. Within the internal space 501 are a hot spot 502 and a cold spot 504 that indicate a lack of uniform temperature distribution within the transport unit 500.

At 415, the TRS controller 105 can control the dynamic airflow distribution system 120 to open one or more gaps 132 that are near an identified hot spot. That is, the TRS controller 105 instructs the ceiling gap closing mechanism(s) 134 and/or the distributor gap closing mechanism(s) 136 near an identified hot spot to open the respective gap(s) 132 to divert conditioned air from the TRU 110 to the identified hot spot(s).

The TRS controller 105 can also control the dynamic airflow distribution system 120 to close one or more gaps 132 that are near an identified cold spot. That is, the TRS controller 105 instructs the ceiling gap closing mechanism(s) 134 and/or the distributor gap closing mechanism(s) 136 near an identified cold spot to close the respective gap(s) 132 to divert conditioned air from the TRU 110 away from the identified cold spot(s).

As shown in Fig. 5B, the dynamic airflow distribution system 120 can remove any hot or cold spots within the internal space 501 to provide a uniform temperature distribution within the transport unit 500.

By providing a uniform temperature distribution within the transport unit 110, the run time of the TRU 110 can be decreased, thereby increasing the fuel efficiency of the TRU 110, saving energy, and ultimately reducing the cost for operating the TRU 110. Also, the cargo stored in the internal space 104 can be protected from temperature variations at different locations within the transport unit 110.

In another example, the TRS controller 105 can control the dynamic airflow distribution system 120 to allow the TRU 110 to operate efficiently when one or more doors of the transport unit 100 are opened. At 410 the TRS controller 105 can use the monitored data received from the plurality of door sensors 142 to determine whether one or more doors of the transport unit 100 are opened.

At 415, the TRS controller 105 can control the dynamic airflow distribution system 120 to close one or more gaps 132 that are near door(s) identified by the plurality of door sensors 142 as being open. That is, the TRS controller 105 instructs the ceiling gap closing mechanism(s) 134 and/or the distributor gap closing mechanism(s) 136 near an identified open door to close the respective gap(s) 132 to divert conditioned air from the TRU 110 away from the identified opened door(s).

Accordingly, the TRU 110 can operate more efficiently as conditioned air from the TRU 110 is not directed towards the doors of the transport unit 100 and out of the internal space 104.

Also, in another example, the TRS controller 105 can control the dynamic airflow distribution system 120 to maintain precise temperature for cargo stored in the internal space 104. At 410 the TRS controller 105 can use the monitored data received from one or more of the plurality of temperature probe 144 to determine whether a particular cargo is at, above or below a desired temperature or desired temperature range for that cargo.

At 415, when the temperature of the particular cargo is above the desired temperature or desired temperature range for that cargo, the TRS controller 105 can control the dynamic airflow distribution system 120 to open one or more gaps 132 that are near the particular cargo. That is, the TRS controller 105 instructs the ceiling gap closing mechanism(s) 134 and/or the distributor gap closing mechanism(s) 136 near the particular cargo to open the respective gap(s) 132 to divert conditioned air from the TRU 110 to the particular cargo to decrease the temperature of the particular cargo. In some embodiments, the TRS controller 105 can also simultaneously control the dynamic airflow distribution system 120 to close one or more gaps 132 that are away from the particular cargo. That is, the TRS controller 105 instructs the ceiling gap closing mechanism(s) 134 and/or the distributor gap closing mechanism(s) 136 away from the particular cargo to close the respective gap(s) 132 to direct more of the conditioned air from the TRU 110 to the particular cargo to decrease the temperature of the particular cargo.

When the temperature of the particular cargo is below the desired temperature or desired temperature range for that cargo, the TRS controller 105 can control the dynamic airflow distribution system 120 to close one or more gaps 132 that are near the particular cargo. That is, the TRS controller 105 instructs the ceiling gap closing mechanism(s) 134 and/or the distributor gap closing mechanism(s) 136 near the particular cargo to close the respective gap(s) 132 to divert conditioned air from the TRU 110 away from the particular cargo to increase the temperature of the particular cargo.

Accordingly, the dynamic airflow distribution system 120 can maintain precise temperature control of cargo stored within the transport unit 100.

In yet another example, the TRS controller 105 can control the dynamic airflow distribution system 120 to operate as a multi-zone refrigerated transport unit. In particular, the TRS controller 105 can divert conditioned air from the TRU 110 toward certain portions of the internal space 104 and divert conditioned air away from other portions of the internal space 104 in order to create different temperature zones within the internal space 104. In one embodiment, the TRS controller 105 can create a first temperature zone that is at a first temperature at a front end of the transport unit 100 near the front wall 102 and a second temperature zone at a second temperature that is different from the first temperature at a second end of the transport unit 100 near the end wall 106. In another embodiment, the TRS controller 105 can create a first temperature zone that is at a first temperature along one side wall (e.g., a curb-side wall) of the transport unit 100 and a second temperature zone at a second temperature that is different from the first temperature along an opposite side wall (e.g., a road-side wall) of the transport unit 100. It will be appreciated that in other embodiments, the TRS controller 105 can create three or more temperature zones as well.

At 410 the TRS controller 105 can determine whether a temperature zone is above or below the desired temperature range for each of the plurality of temperature zones within the internal space 104. That is, the TRS controller 105 can use the monitored data received from the plurality of temperature sensors 140 to determine whether each of the temperature zones are at, above or below a desired temperature range or desired temperature range.

At 415, when the temperature of a particular temperature zone is above the desired temperature or desired temperature range for that particular temperature zone, the TRS controller 105 can control the dynamic airflow distribution system 120 to open one or more gaps 132 that are located in the particular temperature zone of the transport unit 100. That is, the TRS controller 105 instructs the ceiling gap closing mechanism(s) 134 and/or the distributor gap closing mechanism(s) 136 located in the particular temperature zone to open the respective gap(s) 132 to divert conditioned air from the TRU 110 to the particular temperature zone to decrease the temperature of that zone. In some embodiments, the TRS controller 105 can also simultaneously control the dynamic airflow distribution system 120 to close one or more gaps 132 that are located within another temperature zone. That is, the TRS controller 105 instructs the ceiling gap closing mechanism(s) 134 and/or the distributor gap closing mechanism(s) 136 away located within the other temperature zone to close the respective gap(s) 132 to direct more of the conditioned air from the TRU 110 to the particular temperature zone to decrease the temperature of the particular temperature zone.

When the temperature of a particular temperature zone is below the desired temperature range for that zone, the TRS controller 105 can control the dynamic airflow distribution system 120 to close one or more gaps 132 that located in the particular temperature zone. That is, the TRS controller 105 instructs the ceiling gap closing mechanism(s) 134 and/or the distributor gap closing mechanism(s) 136 in the particular temperature zone to close the respective gap(s) 132 to divert conditioned air from the TRU 110 away from the particular temperature zone to increase the temperature of the particular temperature zone.

Accordingly, the dynamic airflow distribution system 120 can provide an active multi-zone temperature control within the transport unit 100. In some embodiments, the dynamic airflow distribution system 120 can provide an active multi-zone temperature control within the transport unit 100 using only a single evaporator unit that is part of the TRU 110. In some other embodiments, the dynamic airflow distribution system 120 can provide an active multi-zone temperature control within the transport unit 100 using a dual evaporator unit that is part of the TRU 110 in which a first evaporator is positioned at a road side of the TRU 110 and the second evaporator is positioned at a curb side of the TRU 110.

## Claims

1. A dynamic airflow distribution system (120) within an interior space of a transport unit (100, 500), the dynamic airflow distribution system (120) comprising:
a dynamic airflow distributor (122) that forms an airflow passage with a ceiling (108) of the transport unit (100, 500), the dynamic airflow distributor (122) extending along a longitudinal direction of the transport unit (100, 500);
a plurality of spacing devices that form a plurality of gaps (132, 132a, 132b) between the ceiling (108) and the dynamic airflow distributor (122); and
a plurality of distributor gap closing mechanisms (136, 136a, 136b), wherein each of the distributor gap closing mechanisms (136, 136a, 136b) is associated with a corresponding gap (132, 132a, 132b) of the plurality of gaps (132, 132a, 132b) between the ceiling (108) and the dynamic airflow distributor (122), and wherein each of the plurality of distributor gap closing mechanisms (136, 136a, 136b) controllably opens and closes the corresponding gap (132, 132a, 132b) of the plurality of gaps (132, 132a, 132b) between the ceiling (108) and the dynamic airflow distributor (122).

2. The dynamic airflow distribution system (120) of claim 1, further comprising a controller, wherein each of the plurality of distributor gap closing mechanisms (136, 136a, 136b) includes an electromagnet, and wherein the controller independently adjusts an electromagnetic field of the electromagnet for each of the plurality of distributor gap closing mechanisms (136, 136a, 136b) to control an opening size of each of the plurality of gaps (132, 132a, 132b), or in the alternative
wherein each of the plurality of distributor gap closing mechanisms (136, 136a, 136b) includes a mechanical pulley.

3. The dynamic airflow distribution system (120) of either of claims 1 or 2, further comprising a plurality of ceiling gap closing mechanisms (134, 134a, 134b), each of the plurality of ceiling gap closing mechanisms (134, 134a, 134b) corresponding to each of the plurality of distributor gap closing mechanisms (136, 136a, 136b), wherein one of the plurality of ceiling gap closing mechanisms (134, 134a, 134b) and the plurality of distributor gap closing mechanisms (136, 136a, 136b) are electromagnets and the other of the plurality of ceiling gap closing mechanisms (134, 134a, 134b) and the plurality of distributor gap closing mechanisms (136, 136a, 136b) are magnets.

4. The dynamic airflow distribution system (120) of any one of claims 1-3, further comprising:
a sensor that monitors a parameter within the transport unit (100, 500) and sends data regarding the parameter to a controller; and
a controller that receives data from the sensor and determines a particular location of a plurality of locations within the transport unit (100, 500) for providing conditioned air based on the data and instructs a particular distributor gap closing mechanism (136, 136a, 136b) of the plurality of distributor gap closing mechanisms (136, 136a, 136b) at the particular location to open a corresponding gap (132, 132a, 132b) of the plurality of gaps (132, 132a, 132b) at the determined particular location.

5. The dynamic airflow distribution system (120) of claim 4, wherein the controller instructs a distant distributor gap closing mechanism (136, 136a, 136b) of the plurality of distributor gap closing mechanisms (136, 136a, 136b) to close a corresponding distant gap (132, 132a, 132b) of the plurality of gaps (132, 132a, 132b) located at a second location of the plurality of locations away from the particular location to divert conditioned air away from the second location, or in the alternative
wherein the sensor is one of a temperature sensor that monitors a temperature at the particular location of the plurality of locations within the transport unit (100, 500), a door sensor that monitors whether a door of the transport unit (100, 500) is opened or closed, and a temperature probe that monitors a temperature of a cargo stored at one or more of the plurality of locations within the transport unit (100, 500).

6. A method (400) for dynamic airflow control within a transport unit (100, 500) using a dynamic airflow distribution system (120) according to claim 1, the method (400) comprising:
a controller receiving data from a sensor that monitors a parameter within the transport unit (100, 500);
the controller determining a particular location of a plurality of locations within the transport unit (100, 500) to direct conditioned air based on the data received from the sensor;
the controller instructing the dynamic airflow distribution system (120) to divert conditioned air to the particular location within the transport unit (100, 500); and
the dynamic airflow distribution system (120) diverting the conditioned air to the particular location within the transport unit (100, 500);
wherein the dynamic airflow distribution system (120) diverting the conditioned air to the particular location within the transport unit (100, 500) includes a particular distributor gap closing mechanism (136, 136a, 136b) of the plurality of distributor gap closing mechanisms (136, 136a, 136b) at the particular location opening a corresponding particular gap (132, 132a, 132b) of the plurality of gaps (132, 132a, 132b) between the ceiling (108) and the dynamic airflow distributor (122) located at the particular location.

7. The method (400) of claim 6, wherein the dynamic airflow distribution system (120) diverting the conditioned air to the particular location within the transport unit (100, 500) includes a distant distributor gap closing mechanism (136, 136a, 136b) of the plurality of distributor gap closing mechanisms (136, 136a, 136b) at a second location away from the particular location closing a corresponding distant gap (132, 132a, 132b) of the plurality of gaps (132, 132a, 132b) located at the second location to divert the conditioned air to the particular location.

8. The method (400) of claim 6, wherein each of the plurality of distributor gap closing mechanisms (136, 136a, 136b) includes an electromagnet, and
wherein diverting the conditioned air to the particular location within the transport unit (100, 500) includes deactivating the electromagnet of a particular distributor gap closing mechanism (136, 136a, 136b) at the particular location to open a particular gap (132, 132a, 132b) of the plurality of gaps (132, 132a, 132b) at the particular location.

9. The method (400) of claim 8, wherein diverting the conditioned air to the particular location within the transport unit (100, 500) includes adjusting an electromagnetic field of the electromagnet of the particular distributor gap closing mechanism (136, 136a, 136b) to control an opening size of the particular gap (132, 132a, 132b).

10. The method (400) of claim 6, wherein the sensor is a temperature sensor, and
wherein the controller receiving data from the sensor that monitors the parameter within the transport unit (100, 500) includes the controller receiving data from the temperature sensor indicating a temperature at the particular location.

11. The method (400) of claim 6, wherein the sensor is a door sensor, and
wherein the controller receiving data from the sensor that monitors the parameter within the transport unit (100, 500) includes the controller receiving data from the door sensor indicating whether a door of the transport unit (100, 500) is opened or closed.

12. The method (400) of claim 6, wherein the sensor is a temperature probe, and
wherein the controller receiving data from the sensor that monitors the parameter within the transport unit (100, 500) includes the controller receiving data from the temperature probe indicating a temperature of a cargo stored at one or more of the plurality of locations within the transport unit (100, 500).

13. A dynamic airflow distributor (122) for a dynamic airflow distribution system (120) according to claim 1, within an interior space of a transport unit (100, 500), the dynamic airflow distributor (122) comprising:
a chute body (121) that forms an airflow passage when attached to a ceiling (108) of the transport unit (100, 500), wherein the chute body (121) extends along a longitudinal direction of the transport unit (100, 500);
a plurality of spacing devices disposed on the chute body (121) that form a plurality of gaps (132, 132a, 132b) between the ceiling (108) and the chute body (121); and
a plurality of distributor gap closing mechanisms (136, 136a, 136b) disposed along a perimeter of the chute body (121), wherein each of the distributor gap closing mechanisms (136, 136a, 136b) controllably opens and closes a corresponding gap (132, 132a, 132b) of the plurality of gaps (132, 132a, 132b) between the ceiling (108) and the chute body (121).

14. The dynamic airflow distributor (122) of claim 13, wherein each of the plurality of distributor gap closing mechanisms (136, 136a, 136b) includes an electromagnet, or in the alternative
wherein each of the plurality of distributor gap closing mechanisms (136, 136a, 136b) includes a magnet, or in the alternative
wherein each of the plurality of distributor gap closing mechanisms (136, 136a, 136b) includes a mechanical pulley.

## Patentansprüche

1. Dynamisches Luftstromverteilungssystem (120) in einem Innenraum einer Transporteinheit (100, 500), wobei das dynamische Luftstromverteilungssystem (120) umfasst:
einen dynamischen Luftstromverteiler (122), der einen Luftstromkanal mit einer Decke (108) der Transporteinheit (100, 500) bildet, wobei sich der dynamische Luftstromverteiler (122) entlang einer Längsrichtung der Transporteinheit (100, 500) erstreckt;
mehrere Abstandsvorrichtungen, die mehrere Spalte (132, 132a, 132b) zwischen der Decke (108) und dem dynamischen Luftstromverteiler (122) bilden; und
mehrere Verteilerspaltverschlussmechanismen (136, 136a, 136b), wobei jeder der Verteilerspaltverschlussmechanismen (136, 136a, 136b) einem entsprechenden Spalt (132, 132a, 132b) der mehreren Spalte (132, 132a, 132b) zwischen der Decke (108) und dem dynamischen Luftstromverteiler (122) zugeordnet ist, und wobei jeder der mehreren Verteilerspaltverschlussmechanismen (136, 136a, 136b) den entsprechenden Spalt (132, 132a, 132b) der mehreren Spalte (132, 132a, 132b) zwischen der Decke (108) und dem dynamischen Luftstromverteiler (122) steuerbar öffnet und schließt.

2. Dynamisches Luftstromverteilungssystem (120) nach Anspruch 1, ferner umfassend eine Steuerung, wobei jeder der mehreren Verteilerspaltverschlussmechanismen (136, 136a, 136b) einen Elektromagneten umfasst, und wobei die Steuerung ein elektromagnetisches Feld des Elektromagneten für jeden der mehreren Verteilerspaltverschlussmechanismen (136, 136a, 136b) unabhängig anpasst, um eine Öffnungsgröße jedes der mehreren Spalte (132, 132a, 132b) zu steuern, oder alternativ
wobei jeder der mehreren Verteilerspaltverschlussmechanismen (136, 136a, 136b) eine mechanische Rolle umfasst.

3. Dynamisches Luftstromverteilungssystem (120) nach einem der Ansprüche 1 oder 2, ferner umfassend mehrere Deckenspaltverschlussmechanismen (134, 134a, 134b), wobei jeder der mehreren Deckenspaltverschlussmechanismen (134, 134a, 134b) jedem der mehreren Verteilerspaltverschlussmechanismen (136, 136a, 136b) entspricht, wobei einer der mehreren Deckenspaltverschlussmechanismen (134, 134a, 134b) und der mehreren Verteilerspaltverschlussmechanismen (136, 136a, 136b) Elektromagnete sind und der andere der mehreren Deckenspaltverschlussmechanismen (134, 134a, 134b) und der mehreren Verteilerspaltverschlussmechanismen (136, 136a, 136b) Magnete sind.

4. Dynamisches Luftstromverteilungssystem (120) nach einem der Ansprüche 1-3, ferner umfassend:
einen Sensor, der einen Parameter in der Transporteinheit (100, 500) überwacht und Daten in Bezug auf den Parameter an eine Steuerung sendet; und
eine Steuerung, die Daten von dem Sensor empfängt und eine spezielle Position mehrerer Positionen in der Transporteinheit (100, 500) zum Bereitstellen von aufbereiteter Luft basierend auf den Daten bestimmt und einen speziellen Verteilerspaltverschlussmechanismus (136, 136a, 136b) der mehreren Verteilerspaltverschlussmechanismen (136, 136a, 136b) an der speziellen Position anweist, einen entsprechenden Spalt (132, 132a, 132b) der mehreren Spalte (132, 132a, 132b) an der bestimmten speziellen Position zu öffnen.

5. Dynamisches Luftstromverteilungssystem (120) nach Anspruch 4, wobei die Steuerung einen entfernten Verteilerspaltverschlussmechanismus (136, 136a, 136b) der mehreren Verteilerspaltverschlussmechanismen (136, 136a, 136b) anweist, einen entsprechenden entfernten Spalt (132, 132a, 132b) der mehreren Spalte (132, 132a, 132b) zu schließen, der sich an einer zweiten Position der mehreren Positionen weg von der speziellen Position befindet, um aufbereitete Luft weg von der zweiten Position umzulenken, oder alternativ
wobei der Sensor eines eines Temperatursensors, der eine Temperatur an der speziellen Position der mehreren Positionen in der Transporteinheit (100, 500) überwacht, eines Türsensors, der überwacht, ob eine Tür der Transporteinheit (100, 500) geöffnet oder geschlossen ist, und eines Temperaturfühlers, der eine Temperatur einer an einer oder mehreren der mehreren Positionen in der Transporteinheit (100, 500) gelagerten Fracht überwacht, ist.

6. Verfahren (400) zur dynamischen Luftstromsteuerung in einer Transporteinheit (100, 500) mithilfe eines dynamischen Luftstromverteilungssystems (120) nach Anspruch 1, wobei das Verfahren (400) umfasst:
eine Steuerung empfängt Daten von einem Sensor, der einen Parameter in der Transporteinheit (100, 500) überwacht;
die Steuerung bestimmt eine spezielle Position mehrerer Positionen in der Transporteinheit (100, 500), um aufbereitete Luft basierend auf den von dem Sensor empfangenen Daten zu lenken;
die Steuerung weist das dynamische Luftstromverteilungssystem (120) an, aufbereitete Luft zu der speziellen Position in der Transporteinheit (100, 500) umzulenken; und
das dynamische Luftstromverteilungssystem (120) lenkt die aufbereitete Luft zu der speziellen Position in der Transporteinheit (100, 500) um;
wobei dass das dynamische Luftstromverteilungssystem (120) die aufbereitete Luft zu der speziellen Position in der Transporteinheit (100, 500) umlenkt, umfasst, dass ein spezieller Verteilerspaltverschlussmechanismus (136, 136a, 136b) der mehreren Verteilerspaltverschlussmechanismen (136, 136a, 136b) an der speziellen Position einen entsprechenden speziellen Spalt (132, 132a, 132b) der mehreren Spalte (132, 132a, 132b) zwischen der Decke (108) und dem dynamischen Luftstromverteiler (122) öffnet, der sich an der speziellen Position befindet.

7. Verfahren (400) nach Anspruch 6, wobei, dass das dynamische Luftstromverteilungssystem (120) die aufbereitete Luft zu der speziellen Position in der Transporteinheit (100, 500) umlenkt, umfasst, dass ein entfernter Verteilerspaltverschlussmechanismus (136, 136a, 136b) der mehreren Verteilerspaltverschlussmechanismen (136, 136a, 136b) an einer zweiten Position weg von der speziellen Position einen entsprechenden entfernten Spalt (132, 132a, 132b) der mehreren Spalte (132, 132a, 132b) schließt, der sich an der zweiten Position befindet, um die aufbereitete Luft zu der speziellen Position umzulenken.

8. Verfahren (400) nach Anspruch 6, wobei jeder der mehreren Verteilerspaltverschlussmechanismen (136, 136a, 136b) einen Elektromagneten umfasst, und
wobei dass die aufbereitete Luft zu der speziellen Position in der Transporteinheit (100, 500) umgelenkt wird, Deaktivieren des Elektromagneten eines speziellen Verteilerspaltverschlussmechanismus (136, 136a, 136b) an der speziellen Position umfasst, um einen speziellen Spalt (132, 132a, 132b) der mehreren Spalte (132, 132a, 132b) an der speziellen Position zu öffnen.

9. Verfahren (400) nach Anspruch 8, wobei dass die aufbereitete Luft zu der speziellen Position in der Transporteinheit (100, 500) umgelenkt wird, Anpassen eines elektromagnetischen Felds des Elektromagneten des speziellen Verteilerspaltverschlussmechanismus (136, 136a, 136b) umfasst, um eine Öffnungsgröße des speziellen Spalts (132, 132a, 132b) zu steuern.

10. Verfahren (400) nach Anspruch 6, wobei der Sensor ein Temperatursensor ist, und
wobei dass die Steuerung Daten von dem Sensor empfängt, der die Parameter in der Transporteinheit (100, 500) überwacht, umfasst, dass die Steuerung Daten von dem Temperatursensor empfängt, die eine Temperatur an der speziellen Position anzeigen.

11. Verfahren (400) nach Anspruch 6, wobei der Sensor ein Türsensor ist, und
wobei dass die Steuerung Daten von dem Sensor empfängt, der die Parameter in der Transporteinheit (100, 500) überwacht, umfasst, dass die Steuerung Daten von dem Türsensor empfängt, die anzeigen, ob eine Tür der Transporteinheit (100, 500) geöffnet oder geschlossen ist.

12. Verfahren (400) nach Anspruch 6, wobei der Sensor ein Temperaturfühler ist, und
wobei dass die Steuerung Daten von dem Sensor empfängt, der die Parameter in der Transporteinheit (100, 500) überwacht, umfasst, dass die Steuerung Daten von dem Temperaturfühler empfängt, die eine Temperatur einer an einer oder mehreren der mehreren Positionen in der Transporteinheit (100, 500) gelagerten Fracht anzeigen.

13. Dynamischer Luftstromverteiler (122) für ein dynamisches Luftstromverteilungssystem (120) nach Anspruch 1 in einem Innenraum einer Transporteinheit (100, 500), wobei der dynamische Luftstromverteiler (122) umfasst:
einen Schachtkörper (121), der einen Luftstromkanal bildet, wenn er an einer Decke (108) der Transporteinheit (100, 500) angebracht ist, wobei sich der Schachtkörper (121) entlang einer Längsrichtung der Transporteinheit (100, 500) erstreckt;
mehrere an dem Schachtkörper (121) angeordnete Abstandsvorrichtungen, die mehrere Spalte (132, 132a, 132b) zwischen der Decke (108) und dem Schachtkörper (121) bilden; und
mehrere entlang eines Umfangs des Schachtkörpers (121) angeordnete Verteilerspaltverschlussmechanismen (136, 136a, 136b), wobei jeder der Verteilerspaltverschlussmechanismen (136, 136a, 136b) einen entsprechenden Spalt (132, 132a, 132b) der mehreren Spalte (132, 132a, 132b) zwischen der Decke (108) und dem Schachtkörper (121) steuerbar öffnet und schließt.

14. Dynamischer Luftstromverteiler (122) nach Anspruch 13, wobei jeder der mehreren Verteilerspaltverschlussmechanismen (136, 136a, 136b) einen Elektromagneten umfasst, oder alternativ wobei jeder der mehreren Verteilerspaltverschlussmechanismen (136, 136a, 136b) einen Magneten umfasst, oder alternativ
wobei jeder der mehreren Verteilerspaltverschlussmechanismen (136, 136a, 136b) eine mechanische Rolle umfasst.

## Revendications

1. Système de distribution d'écoulement d'air dynamique (120) à l'intérieur d'un espace intérieur d'une unité de transport (100, 500), le système de distribution d'écoulement d'air dynamique (120) comprenant :
un distributeur d'écoulement d'air dynamique (122) qui forme un passage d'écoulement d'air avec un plafond (108) de l'unité de transport (100, 500), le distributeur d'écoulement d'air dynamique (122) s'étendant le long d'une direction longitudinale de l'unité de transport (100, 500) ;
une pluralité de dispositifs d'espacement qui forment une pluralité d'écarts (132, 132a, 132b) entre le plafond (108) et le distributeur d'écoulement d'air dynamique (122) ; et
une pluralité de mécanismes de fermeture d'écart de distributeur (136, 136a, 136b), dans lequel chacun des mécanismes de fermeture d'écart de distributeur (136, 136a, 136b) est associé à un écart correspondant (132, 132a, 132b) de la pluralité d'écarts (132, 132a, 132b) entre le plafond (108) et le distributeur d'écoulement d'air dynamique (122), et dans lequel chacun de la pluralité de mécanismes de fermeture d'écart de distributeur (136, 136a, 136b) ouvre et ferme de façon commandable l'écart correspondant (132, 132a, 132b) de la pluralité d'écarts (132, 132a, 132b) entre le plafond (108) et le distributeur d'écoulement d'air dynamique (122).

2. Système de distribution d'écoulement d'air dynamique (120) selon la revendication 1, comprenant en outre un appareil de commande, dans lequel chacun de la pluralité de mécanismes de fermeture d'écart de distributeur (136, 136a, 136b) inclut un électro-aimant, et dans lequel l'appareil de commande ajuste indépendamment un champ électromagnétique de l'électro-aimant pour chacun de la pluralité de mécanismes de fermeture d'écart de distributeur (136, 136a, 136b) pour commander une taille d'ouverture de chacun de la pluralité d'écarts (132, 132a, 132b), ou en variante
dans lequel chacun de la pluralité de mécanismes de fermeture d'écart de distributeur (136, 136a, 136b) inclut une poulie mécanique.

3. Système de distribution d'écoulement d'air dynamique (120) selon l'une ou l'autre des revendications 1 ou 2, en outre
comprenant une pluralité de mécanismes de fermeture d'écart de plafond (134, 134a, 134b), chacun de la pluralité de mécanismes de fermeture d'écart de plafond (134, 134a, 134b) correspondant à chacun de la pluralité de mécanismes de fermeture d'écart de distributeur (136, 136a, 136b), dans lequel un de la pluralité de mécanismes de fermeture d'écart de plafond (134, 134a, 134b) et de la pluralité de mécanismes de fermeture d'écart de distributeur (136, 136a, 136b) sont des électro-aimants et l'autre de la pluralité de mécanismes de fermeture d'écart de plafond (134, 134a, 134b) et de la pluralité de mécanismes de fermeture d'écart de distributeur (136, 136a, 136b) sont des aimants.

4. Système de distribution d'écoulement d'air dynamique (120) selon l'une quelconque des revendications 1 à 3, comprenant en outre :
un capteur qui surveille un paramètre à l'intérieur de l'unité de transport (100, 500) et envoie des données concernant le paramètre à un appareil de commande ; et
un appareil de commande qui reçoit des données à partir du capteur et détermine un emplacement particulier d'une pluralité d'emplacements à l'intérieur de l'unité de transport (100, 500) pour fournir de l'air climatisé sur la base des données et donne l'instruction à un mécanisme de fermeture d'écart de distributeur particulier (136, 136a, 136b) de la pluralité de mécanismes de fermeture d'écart de distributeur (136, 136a, 136b) à l'emplacement particulier d'ouvrir un écart correspondant (132, 132a, 132b) de la pluralité d'écarts (132, 132a, 132b) à l'emplacement particulier déterminé.

5. Système de distribution d'écoulement d'air dynamique (120) selon la revendication 4, dans lequel l'appareil de commande donne l'instruction à un mécanisme de fermeture d'écart de distributeur distant (136, 136a, 136b) de la pluralité de mécanismes de fermeture d'écart de distributeur (136, 136a, 136b) de fermer un écart distant correspondant (132, 132a, 132b) de la pluralité d'écarts (132, 132a, 132b) situé à un deuxième emplacement, de la pluralité d'emplacements, éloigné de l'emplacement particulier, pour dévier de l'air climatisé à partir du deuxième emplacement, ou en variante
dans lequel le capteur est un d'un capteur de température qui surveille une température à l'emplacement particulier de la pluralité d'emplacements à l'intérieur de l'unité de transport (100, 500), d'un capteur de porte qui surveille si une porte de l'unité de transport (100, 500) est ouverte ou fermée, et une sonde de température qui surveille une température d'un chargement stocké à un ou plusieurs de la pluralité d'emplacements à l'intérieur de l'unité de transport (100, 500).

6. Procédé (400) de commande d'écoulement d'air dynamique à l'intérieur d'une unité de transport (100, 500) en utilisant un système de distribution d'écoulement d'air dynamique (120) selon la revendication 1, le procédé (400) comprenant :
la réception, par un appareil de commande, de données à partir d'un capteur qui surveille un paramètre à l'intérieur de l'unité de transport (100, 500) ;
la détermination, par l'appareil de commande, d'un emplacement particulier d'une pluralité d'emplacements à l'intérieur de l'unité de transport (100, 500) pour diriger de l'air climatisé sur la base des données reçues à partir du capteur ;
l'instruction, par l'appareil de commande, au système de distribution d'écoulement d'air dynamique (120), de dévier de l'air climatisé vers l'emplacement particulier à l'intérieur de l'unité de transport (100, 500) ; et
la déviation, par le système de distribution d'écoulement d'air dynamique (120), de l'air climatisé vers l'emplacement particulier à l'intérieur de l'unité de transport (100, 500) ;
dans lequel la déviation, par le système de distribution d'écoulement d'air dynamique (120), de l'air climatisé vers l'emplacement particulier à l'intérieur de l'unité de transport (100, 500) inclut l'ouverture, par un mécanisme de fermeture d'écart de distributeur particulier (136, 136a, 136b) de la pluralité de mécanismes de fermeture d'écart de distributeur (136, 136a, 136b) à l'emplacement particulier, d'un écart particulier correspondant (132, 132a, 132b) de la pluralité d'écarts (132, 132a, 132b) entre le plafond (108) et le distributeur d'écoulement d'air dynamique (122) situé à l'emplacement particulier.

7. Procédé (400) selon la revendication 6, dans lequel la déviation, par le système de distribution d'écoulement d'air dynamique (120), de l'air climatisé vers l'emplacement particulier à l'intérieur de l'unité de transport (100, 500) inclut la fermeture, par un mécanisme de fermeture d'écart de distributeur distant (136, 136a, 136b) de la pluralité de mécanismes de fermeture d'écart de distributeur (136, 136a, 136b) à un deuxième emplacement éloigné de l'emplacement particulier, d'un écart distant correspondant (132, 132a, 132b) de la pluralité d'écarts (132, 132a, 132b) situés au deuxième emplacement pour dévier l'air climatisé vers l'emplacement particulier.

8. Procédé (400) selon la revendication 6, dans lequel chacun de la pluralité de mécanismes de fermeture d'écart de distributeur (136, 136a, 136b) inclut un électro-aimant, et
dans lequel la déviation de l'air climatisé vers l'emplacement particulier à l'intérieur de l'unité de transport (100, 500) inclut la désactivation de l'électro-aimant d'un mécanisme de fermeture d'écart de distributeur particulier (136, 136a, 136b) à l'emplacement particulier pour ouvrir un écart particulier (132, 132a, 132b) de la pluralité d'écarts (132, 132a, 132b) à l'emplacement particulier.

9. Procédé (400) selon la revendication 8, dans lequel la déviation de l'air climatisé vers l'emplacement particulier à l'intérieur de l'unité de transport (100, 500) inclut l'ajustement d'un champ électromagnétique de l'électro-aimant du mécanisme de fermeture d'écart de distributeur particulier (136, 136a, 136b) pour commander une taille d'ouverture de l'écart particulier (132, 132a, 132b).

10. Procédé (400) selon la revendication 6, dans lequel le capteur est un capteur de température, et
dans lequel la réception, par l'appareil de commande, de données à partir du capteur qui surveille le paramètre à l'intérieur de l'unité de transport (100, 500) inclut la réception, par l'appareil de commande, de données à partir du capteur de température indiquant une température à l'emplacement particulier.

11. Procédé (400) selon la revendication 6, dans lequel le capteur est un capteur de porte, et
dans lequel la réception, par l'appareil de commande, de données à partir du capteur qui surveille le paramètre à l'intérieur de l'unité de transport (100, 500) inclut la réception, par l'appareil de commande, de données à partir du capteur de porte indiquant si une porte de l'unité de transport (100, 500) est ouverte ou fermée.

12. Procédé (400) selon la revendication 6, dans lequel le capteur est une sonde de température, et
dans lequel la réception, par l'appareil de commande, de données à partir du capteur qui surveille le paramètre à l'intérieur de l'unité de transport (100, 500) inclut la réception, par l'appareil de commande, de données à partir de la sonde de température indiquant une température d'un chargement stocké à un ou plusieurs de la pluralité d'emplacements à l'intérieur de l'unité de transport (100, 500).

13. Distributeur d'écoulement d'air dynamique (122) pour un système de distribution d'écoulement d'air dynamique (120) selon la revendication 1, à l'intérieur d'un espace intérieur d'une unité de transport (100, 500), le distributeur d'écoulement d'air dynamique (122) comprenant :
un corps de goulotte (121) qui forme un passage d'écoulement d'air lorsqu'il est attaché à un plafond (108) de l'unité de transport (100, 500), dans lequel le corps de goulotte (121) s'étend le long d'une direction longitudinale de l'unité de transport (100, 500) ;
une pluralité de dispositifs d'espacement disposés sur le corps de goulotte (121) qui forment une pluralité d'écarts (132, 132a, 132b) entre le plafond (108) et le corps de goulotte (121) ; et
une pluralité de mécanismes de fermeture d'écart de distributeur (136, 136a, 136b) disposés le long d'un périmètre du corps de goulotte (121), dans lequel chacun des mécanismes de fermeture d'écart de distributeur (136, 136a, 136b) ouvre et ferme de façon commandable un écart correspondant (132, 132a, 132b) de la pluralité d'écarts (132, 132a, 132b) entre le plafond (108) et le corps de goulotte (121).

14. Distributeur d'écoulement d'air dynamique (122) selon la revendication 13, dans lequel chacun de la pluralité de mécanismes de fermeture d'écart de distributeur (136, 136a, 136b) inclut un électro-aimant, ou en variante
dans lequel chacun de la pluralité de mécanismes de fermeture d'écart de distributeur (136, 136a, 136b) inclut un aimant, ou en variante
dans lequel chacun de la pluralité de mécanismes de fermeture d'écart de distributeur (136, 136a, 136b) inclut une poulie mécanique.
